Europäisches Patentamt

European Patent Office

Office européen des brevets

(19)

(11) Veröffentlichungsnummer : **0 092 750**
**B1**

(12) # EUROPÄISCHE PATENTSCHRIFT

(45) Veröffentlichungstag der Patentschrift :
28.08.85

(21) Anmeldenummer : 83103682.7

(22) Anmeldetag : 15.04.83

(51) Int. Cl.⁴ : **H 02 J 13/00, H 04 B 3/54**

(54) **System zur Übertragung von Informationstelegrammen.**

(30) Priorität : 22.04.82 DE 3215081

(43) Veröffentlichungstag der Anmeldung :
02.11.83 Patentblatt 83/44

(45) Bekanntmachung des Hinweises auf die Patenterteilung : 28.08.85 Patentblatt 85/35

(84) Benannte Vertragsstaaten :
**AT BE CH DE FR GB IT LI LU NL SE**

(56) Entgegenhaltungen :
DE-A- 2 727 734
DE-B- 1 287 190
US-A- 3 689 886

(73) Patentinhaber : **Siemens Aktiengesellschaft**
**Berlin und München Wittelsbacherplatz 2**
**D-8000 München 2 (DE)**

(72) Erfinder : **Frühauf, Waldemar, Dr.**
**Clausewitzstrasse 34**
**D-8500 Nürnberg (DE)**

EP 0 092 750 B1

## Beschreibung

Die Erfindung betrifft ein System zur Übertragung von Informationstelegrammen, die in Form von Digitalsignalen codiert sind, wobei ein die Prüfung jeder Informationseinheit gestattender Code gewählt ist, mit einer Zentralstation und einer Reihe von Unterstationen, an die die Informationstelegramme der Zentralstation über das elektrische Netz als Übertragungsweg, der von weiteren gleichartigen Systemen genutzt wird, selektiv abgebbar sind, wobei jede Unterstation bereits aufgrund einer als fehlerhaft erkannten Informationseinheit die weitere Informationsauswertung abbricht und wobei jedes der Informationstelegramme eine wählbare, für das betreffende System spezifische Teilfolge von Digitalsignalen aufweist, die nicht am Ende der das Informationstelegramm darstellenden Gesamtfolge von Digitalsignalen auftritt.

Ein derartiges System ist in Handel verfügbar und wird als sogenanntes eigenleitungsloses Hausleitsystem genutzt. Als « eigenleitungslos » wird dieses System deswegen bezeichnet, weil zur Informationsübertragung zwischen Zentralstation und Unterstationen kein eigenes Leitungsnetz gezogen wird, sondern die Phasenleiter des bereits installierten elektrischen Netzes als Übertragungsweg genutzt werden, wobei die Netzspannung zur Synchronisierung von Zentralstation und Unterstationen dient. Als « Hausleitsystem » wird ein solches System deswegen bezeichnet, weil in einem Gebäude oder auch nur einer Wohnung vorhandene elektrische Geräte durch die diesen Geräten zugeordnete Unterstationen von der Zentralstation aus selektiv gesteuert, also beispielsweise ein- oder ausgeschaltet, bezüglich ihres Zustandes abgefragt oder im Falle elektrischer Beleuchtungskörper ein Dimmvorgang durchgeführt werden kann. Als die Adressen oder Operationsbefehle für die den einzelnen Geräten zugeordneten Unterstationen transportierende Informationstelegramme dienen trägerfrequent übertragene Digitalsignale, wobei die Trägerfrequenz hoch ist im Vergleich zur Netzfrequenz sowie zur Grundfrequenz der Digitalsignale. Die Codierung der Digitalsignale ist hierbei so gewählt, daß ein die Prüfung jeder Informationseinheit für sich gestattender Code eingesetzt ist. Diese Forderung erfüllt ein redundanter Code. Jedes im Rahmen eines solchen speziellen Systems genutztes Informationstelegramm enthält im ersten Bereich eine wählbare, für das betreffende System spezifische Teilfolge von Digitalsignalen, die als « Hauscode » bezeichnet wird. Damit wird es möglich, wenn in einem Gebäude beispielsweise mehrere Wohnungen vorhanden sind, in denen jeweils ein solches System mit gleicher Trägerfrequenz eingesetzt ist, die gegenseitige Beeinflussung solcher Systeme auszuschließen, da jede Unterstation eines solchen Systems nur dann anspricht, wenn sowohl der für die Wohnung gewählte « Hauscode » und die spezielle Adresse der Unterstation im Informationstelegramm enthalten ist. Selbstverständlich gilt die gleiche Überlegung auch für in benachbarten Gebäuden untergebrachte gleichartige Systeme.

Es ist aber nicht auszuschließen, daß Nachbarn, die sich solcher gleichartiger Systeme bedienen, beabsichtigt oder unbeabsichtigt einen bereits von einem anderen Nachbarn gewählten « Hauscode » verwenden und damit Steuerungsvorgänge im Haus oder in der Vohnung des anderen Nachbarn auslösen können. Um eine solche Fremdbeeinflussung auszuschließen, ist es üblich, Trägerfrequenzsperren nach dem Elektrizitätszähler in jeder ein solches System nutzenden Wohnung oder jedem ein solches System nutzenden Gebäude anzuordnen. Solche Trägerfrequenzsperren müssen zusätzlich zu einem solchen System gekauft und durch einen Fachmann installiert werden, wodurch zusätzliche Kosten entstehen.

Der Erfindung liegt die Aufgabe zugrunde, ein System der eingangs genannten Art so zu verbessern, daß ohne Einsatz von Trägerfrequenzsperren die gegenseitige Beeinflußbarkeit solcher den gleichen Übertragungsweg nutzenden benachbarten Systeme ausgeschlossen ist.

Die Aufgabe wird erfindungsgemäß durch folgende Merkmale gelöst :

a) Die Zentralstation gibt während der Dauer eines jeden von ihr abgegebenen Informationstelegramms ein elektrisches Betriebssignal ab,

b) es ist eine Überwachungseinheit vorgesehen, der das Betriebssignal zugeführt ist,

c) die Überwachungseinheit enthält

aa) einen an den Übertragungsweg angeschlossenen Empfangsteil für die Informationstelegramme,

bb) einen Speicher, in dem die für das betreffende System spezifische Teilfolge von Digitalsignalen abgelegt ist,

cc) eine Vergleichseinrichtung, in der das Informationstelegramm auf das Auftreten der für das betreffende System spezifischen Teilfolge von Digitalsignalen hin analysiert wird,

dd) einen ebenfalls an den Übertragungsweg angeschlossenen Sendeteil, der immer dann, wenn eine für das betreffende System spezifische Teilfolge von Digitalsignalen in einem eigehenden Informationstelegramm auftritt, ohne daß gleichzeitig das Betriebssignal vorhanden ist, ein eine Codeverletzung im Informationstelegramm bewirkendes Signal emittiert.

Hierbei wird die Eigenschaft der Unterstationen benutzt, daß sie aufgrund des eine Überprüfung jeder Informationseinheit für sich gestattenden Codes bei einer als fehlerhaft erkannten Informationseinheit die weitere Informationsauswertung abbrechen und in den passiven Zustand zurückfallen. Geht ein von einem benachbarten System stammendes Informationstelegramm mit dem gleichen « Hauscode » wie im betrachteten System ein, dann wird die Überwachungseinheit aus dem Fehlen des Betriebssignales der eigenen Zentralstation dies sofort als fremdes Informationstelegramm erkennen und auf den Übertragungsweg ein Signal emittieren, das eine Codeverletzung im einlaufenden Informationstelegramm hervorruft. Die in der Adressierung angesprochene eigene Unterstation empfängt nun dieses eine Codeverletzung beinhaltende Informationstelegramm und bricht daraufhin jede weitere Aktivität ab. Wegen des Fehlens von Trägerfrequenzsperren ist dieses mit einer Codeverletzung behaftete Informationstelegramm auch im Übertragungsweg des Fremdsystems vorhanden, so daß der Benutzer des Fremdsystems durch das Nichtansprechen seiner eigenen adressierten Unterstation dazu gezwungen wird, eine Änderung des gewählten « Hauscodes » vorzunehmen. Die Wirksamkeit der Überwachungseinheit ist nicht auf Systeme mit trägerfrequenten Informationstelegrammen beschränkt. Der in der Überwachungseinheit vorzusehende Empfangsteil kann völlig gleich aufgebaut sein wie der in den Unterstationen verwendete. In gleicher Weise kann der in der Überwachungseinheit enthaltene Sendeteil in gleicher Weise aufgebaut sein wie der in der Zentralstation enthaltene Sendeteil. Da die Überwachungseinheit wegen des von ihr benötigten Betriebssignals im allgemeinen sich in der Nähe der Zentralstation befindet oder gar in diese integriert ist, können Funktionselemente der Zentralstation gleichzeitig von der Überwachungseinheit mitbenutzt werden. Dies gilt beispielsweise für den Sendeteil oder auch den Speicher, in dem die für das betreffende System spezifische Teilfolge von Digitalsignalen (Hauscode) abgelegt ist.

In einer bevorzugten Ausführungsform des Systems werden die Informationstelegramme als eine Trägerfrequenz modulierende Digitalsignale übertragen. Damit können mit einem beschränkten Aufwand auch verhältnismäßig lange Digitalsignale übertragen werden. Eine angesichts der Netzeigenschaften sowie der bestehenden Bestimmungen günstige Frequenz liegt hierbei bei 90 kHz.

Vorteilhafterweise ist als die Prüfung jeder Informationseinheit gestattender Code der Biphase-Code gewählt, bei dem der einer Informationseinheit zugeordnete logische Wert in invertierter Form wiederholt wird. Damit wird jedes den logischen Wert « 1 » repräsentierende Digitalsignal zwangsläufig durch ein den logischen Wert « 0 » repräsentierendes Digitalsignal wiederholt. Dies gilt analog für ein den logischen Wert « 0 » repräsentierenden Wert. Tritt somit bei der Übertragung einer Informationseinheit eine Folge von zwei den logischen Wert « 1 » bzw. den logischen Wert « 0 » repräsentierenden Digitalsignale auf, dann liegt eine Codeverletzung vor, die auf einen Übertragungsfehler rückschließen läßt und die Unterstationen inaktiviert.

In einer bevorzugten Ausführungsform wird jede Informationseinheit des Informationstelegramms im Bereich eines Nulldurchgangs der Netzspannung emittiert. Damit werden die Informationseinheiten darstellenden Digitalsignale nicht wesentlich durch Impedanzeinbrüche und Störungen berührt, die beispielsweise von den Stromspitzen der Ladekondensatoren der Netzteile, die Bestandteile der an das elektrische Netz angeschlossenen elektrischen Geräte sind, herrühren. Es ist günstig, wenn das eine den einen logischen Wert darstellende Digitalsignal als Sinuswellenzug ausgebildet ist. Ein solcher trägerfrequenter Sinuswellenzug belastet den Übertragungsweg nicht mit höheren Harmonischen der Trägerfrequenz.

In einer bevorzugten Ausführungsform liegt die für das betreffende System spezifische Teilfolge von Digitalsignalen am Anfang des Informationstelegramms. Damit steht die den « Hauscode » darstellende spezifische Teilfolge von Digitalsignalen im Rahmen eines Informationstelegramms für die Auswertung in der Überwachungseinheit sehr frühzeitig zur Verfügung, so daß für die Auswertung und Emission des eine Codeverletzung bewirkenden Signals ein weiter Zeitrahmen nutzbar ist.

Es ist vorteilhaft, wenn der Empfangsteil einen auf die Trägerfrequenz abgestimmten selektiven Empfänger sowie einen Demodulator umfaßt. Durch die Selektivität des Empfängers kommt es bei der trägerfrequenten Übertragung von Digitalsignalen zu einer erwünschten Abschwächung von Störsignalen. Der Demodulator reproduziert die die Umhüllende der Trägerfrequenz darstellenden Digitalsignale.

Die Vergleichseinrichtung kann einen elektronischen Telegrammspeicher für zumindest die für das betreffende System spezifische Teilfolge von Digitalsignalen aufweisen, dessen Eingang mit dem Ausgang des Demodulators verbunden ist und dessen Ausgang mit dem einen Eingang eines elektronischen Komparators verbunden ist, an dessen zweiten Eingang der Speicher angeschlossen ist. Der elektronische Telegrammspeicher dient hierfür mindestens zur Aufnahme der für das betreffende System spezifischen Teilfolge von Digitalsignalen, die den « Hauscode » darstellt, beispielsweise im Biphase-Code. Der darüber hinaus in der Überwachungseinheit vorhandene Speicher enthält als Festwertspeicher ebenfalls die für das betreffende System spezifische Teilfolge von Digitalsignalen, den « Hauscode », beispielsweise ebenfalls im Biphase-Code. Der mit beiden Speichern verbundene elektronische Komparator wird ausgangsseitig dann aktiv, wenn eine Übereinstimmung vorliegt.

In einer besonders einfachen und kostengünstigen Ausführungsform ist der Telegrammspeicher als Schieberegister ausgebildet. Durch eine mit dem Einlaufen der für das betreffende System spezifischen Teilfolge von Digitalsignalen, dem « Hauscode », synchronisierte Taktung des Schieberegisters wird diese Teilfolge zumindest für die Zeitspanne der anschließenden Auswertung in der Überwachungseinheit abgespeichert, so daß sie für den Vergleich mit dem Inhalt des vorzugsweise als Festwertspeicher ausgebildeten Speichers abgelegt zur Verfügung steht.

Eine bevorzugte Ausführungsform besteht darin, daß das Ausgangssignal des Komparators sowie das invertierte Betriebssignal konjunktiv verknüpft in Wirkverbindung mit dem Triggereingang des Sendeteils steht, das nach Triggerung zum Zeitpunkt des Auftretens der nächsten Informationseinheit einen Sinuswellenzug der Trägerfrequenz emittiert, dessen Dauer mindestens der Dauer einer Informationseinheit im Biphase-Code entspricht. Die konjunktive Verknüpfung kann durch ein UND-Gatter erfolgen. Durch die Bemessung der Mindestdauer des vom Sendeteil emittierten Sinuswellenzuges ist sichergestellt, daß dann, wenn im Biphase-Code der logische Wert « 0 » vorliegt, der üblicherweise einer Lücke des Sinuswellenzuges entspricht, durch einen Sinuswellenzug überschrieben wird, so daß immer die im Biphase-Code verbotene logische Wertfolge « 1 »-« 1 » auftritt. Diese Codeverletzung wird in den Unterstationen erkannt und führt sofort zum Abbruch der weiteren Auswertung eines anstehenden Informationstelegramms.

Dem Ausgang des Empfangsteils kann ein Biphase-Decoder nachgeschaltet sein, dessen Ausgangssignal dem Eingang des Telegrammspeichers zugeführt ist. Im Biphase-Decoder erfolgt die Rückwandlung der im Biphase-Code codierten einzelnen Informationseinheiten eines Informationstelegramms in den redundanzfreien Binärcode. Der Telegrammspeicher kann in diesem Fall kleiner ausgelegt sein, da er ja nicht die im Biphase-Code in invertierter Form jeweils redundant vorhandene Information einspeichern muß. Damit kann auch der in der Überwachungseinheit ohnehin vorhandene Speicher, der dauernd die für das betreffende System spezifische Teilfolge von Digitalsignalen (« Hauscode ») enthält, auf einen kleineren Speicherinhalt hin ausgelegt sein.

In einer besonders aufwandsarmen Gestaltung ist der Biphase-Decoder als aus zwei Flip-Flops bestehendes zweistufiges Schieberegister ausgebildet. Als Flip-Flops kommen hier vorzugsweise D-Flip-Flops infrage. Die Taktung dieser Flip-Flops und auch der anderen taktbedürftigen Funktionselemente der Überwachungseinheit erfolgt durch eine netzsynchronisierte Taktversorgungsschaltung, wobei ein Phasendetektor, ein Schleifenfilter, ein spannungsgesteuerter Oszillator und eine Frequenzteilerkette zusammen eine PLL-Einheit bilden, aus deren Einzelfrequenzen durch entsprechende logische Verknüpfungen die einzelnen Taktmuster ohne weiteres herleitbar sind.

Eine bevorzugte Ausführungsform der Erfindung besteht darin, daß ein Biphase-Codeprüfer vorgesehen ist, der eingangsseitig in Wirkverbindung mit dem Biphase-Decoder steht und der ausgangsseitig bei Auftreten einer Codeverletzung im Informationstelegramm ein Rückstellsignal für einen Telegrammzähler liefert, wobei der Telegrammzähler den Eingang der für das betreffende System spezifischen Teilfolge von Digitalsignalen zählend erfaßt, und daß für den Inhalt des Telegrammzählers ein Abfrageglied vorgesehen ist, dessen Ausgangssignal jeweils nach vollständigem Eingang der gesamten für das betreffende System spezifischen Teilfolge von Digitalsignalen ohne Codeverletzung aktiv ist, und daß das Ausgangssignal des Abfragegliedes zusammen mit dem Ausgangssignal des Komparators und dem invertierten Betriebssignal in einem UND-Gatter konjunktiv verknüpft ist. Da üblicherweise vor dem eigentlichen Beginn eines Informationstelegramms als sogenannter Startimpuls ein codeverletzendes Signal gesendet wird, setzt damit der Biphase-Codeprüfer den Telegrammzähler auf Null. Der Telegrammzähler verfolgt anschließend den Eingang der für das betreffende System spezifischen Teilfolge von Digitalsignalen (« Hauscode ») und liefert — solange im « Hauscode » keine Codeverletzung auftritt — nach Eingang des vollständigen « Hauscodes » über das Abfrageglied ein Signal, das letztlich, wenn das gerade eingehende Informationstelegramm im « Hauscode » mit dem im Speicher befindlichen « Hauscode » übereinstimmt und wenn dieses Informationstelegramm nicht von der eigenen Zentralstation stammt, den Sendeteil für die Emission eines im Biphase-Code verbotenen Impulsmusters in Betrieb setzt.

Dem UND-Gatter ist vorzugsweise eine monostabile Kippstufe nachgeschaltet, deren instabiler Zustand nach dem Setzen zumindest bis zum Abschluß der nachfolgenden Informationseinheit im Informationstelegramm andauert. Durch diese monostabile Kippstufe wird sichergestellt, daß zumindest die sich an den « Hauscode » anschließende Informationseinheit des Informationstelegramms durch eine codeverletzende « Doppeleins » — wenn erforderlich — von dem Sendeteil überschrieben werden kann. Damit liegt im elektrischen Netz nur noch ein mit einer Codeverletzung behaftetes Informationstelegramm vor, so daß von allen Unterstationen die Auswertung verweigert wird.

Speziell für den Fall, daß die einzelnen Informationseinheiten eines Informationstelegramms in zeitlicher Synchronisation mit den Nulldurchgängen der Wechselspannung übertragen werden, ist es vorteilhaft, wenn das Ausgangssignal der monostabilen Kippstufe in einem weiteren UND-Gatter konjunktiv verknüpft ist mit einem Signal, das ausschließlich im Bereich der Nulldurchgänge der Netzwechselspannung für die Dauer einer Informationseinheit aktiv ist, wobei das Ausgangssignal des weiteren UND-Gatters den Sendeteil in Betrieb setzt. Damit wird erreicht, daß genau für die Dauer der sich an den « Hauscode » anschließenden Informationseinheit, die um eine halbe Netzperiode gegenüber der letzten zum « Hauscode » gehörenden Informationseinheit versetzt ist, ein Dauersignal des Sendeteils in das gerade vorhandene Informationstelegramm in Form einer codeverletzenden « Doppeleins » eingefügt wird.

Die Erfindung wird im folgenden anhand eines in den Fig. 1 bis 28 dargestellten Ausführungsbeispiels näher erläutert. Dabei zeigen :

Figur 1 eine Konfiguration zweier übereinstimmender benachbarter Systeme innerhalb eines Gebäudes in Blockdarstellung,

Figur 2 bis 7 anhand von Impulstelegrammen die Wirkungsweise der Überwachungseinheit, wenn die dem eigenen System zugehörige Zentralstation ein Impulstelegramm emittiert,

Figur 8 bis 14 anhand von Impulstelegrammen die Wirkungsweise der Überwachungseinheit, wenn ein von einem benachbarten System stammendes fremdes Informationstelegramm in den Übertragungsweg des eigenen Systems einläuft,

Figur 15 das mit der Netzfrequenz synchronisierte Auftreten der ersten drei Informationseinheiten des in den Fig. 2 und 8 dargestellten Informationstelegramms im Biphase-Code und

Figur 16 ein Blockschaltbild der Überwachungseinheit, wobei die Übertragung der einzelnen Informationseinheiten eines Impulstelegramms zeitlich an die Nulldurchgänge der Netzwechselspannung gebunden sein soll und

Figur 17 bis 28 die zugehörigen Signalverläufe.

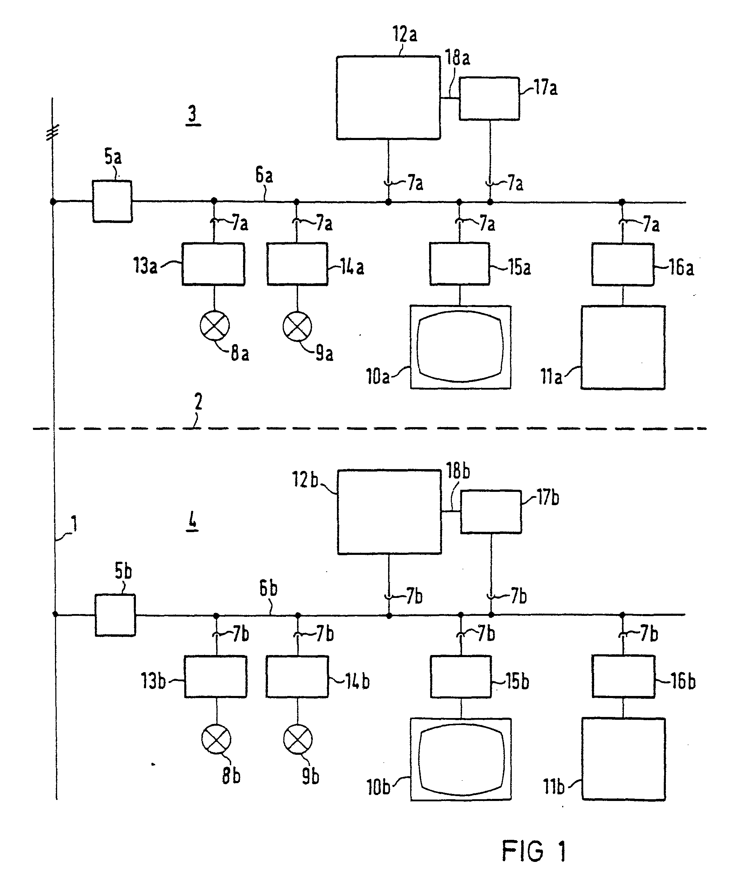

In Fig. 1 ist mit dem Bezugszeichen 1 die in einem Haus installierte Speiseleitung des elektrischen Versorgungsnetzes bezeichnet. Die gestrichelte Linie 2 symbolisiert die Trennung zwischen zwei Wohnungen 3 und 4. Die Wohnungen 3 und 4 sind mit einer übereinstimmenden elektrischen Installation und übereinstimmenden elektrischen Geräten ausgestattet, so daß es genügt, die Installation sowie die elektrischen Geräte der Wohnung 3 näher zu beschreiben. Übereinstimmende Geräte in den beiden Wohnungen 3 und 4 werden durch das den Bezugszeichen nachgestellte Symbol a bzw. b voneinander unterschieden.

Über den Elektrizitätszähler 5a wird das in der Wohnung 3 installierte elektrische Netz 6a gespeist. Der Anschluß der elektrischen Geräte in der Wohnung 3 erfolgt über die Steckdosen 7a. Als elektrische Geräte in der Wohnung 3 dienen beispielhaft die beiden Leuchten 8a und 9a, das Fernsehgerät 10a sowie der elektrische Herd 11a.

An das in der Wohnung 3 vorhandene elektrische Netz 6a ist über die Steckdose 7a die Zentralstation 12a eines erfindungsgemäßen Systems angeschlossen. Die elektrischen Geräte 8a bis 11a sind unter Zwischenschaltung der untereinander baugleichen Unterstationen 13a bis 16a über die Steckdosen 7a an das elektrische Netz 6a angekoppelt. Als Übertragungsweg für die Informationstelegramme zwischen der Zentralstation 12a sowie den Unterstationen 13a bis 16a dient mindestens ein Phasenleiter des installierten elektrischen Netzes, vorzugsweise jedoch alle drei Phasenleiter, damit auch an den ja mit beliebigen Phasenleitern verbundenen Steckdosen 7a die Informationstelegramme einspeisbar und entnehmbar sind. Über die Unterstationen 13a bis 16a können die angeschlossenen elektrischen Geräte 8a bis 11a ein- und ausgeschaltet werden, wobei im Fall der Leuchten 8a und 9a auch Dimmvorgänge durchführbar sind.

Die Informationstelegramme seien in Form von eine Trägerfrequenz modulierenden Digitalsignalen im Übertragungsweg vorhanden, wobei jede einzelne Informationseinheit jedes Informationstelegramms in einem die Prüfung jeder dieser Informationseinheiten gestattenden Code verschlüsselt ist. Als solcher Code wird der Biphase-Code verwendet, der später noch näher erläutert wird. Jede der Unterstationen 13a bis 16a enthält eine Code-Prüfschaltung, die bei Auftreten einer Code-Verletzung in einem Informationstelegramm den sofortigen Abbruch der weiteren Auswertung der angesprochenen Unterstation hervorruft.

Im Rahmen von bisher bereits bekannten solchen Systemen ist es üblich, in jeder Wohnung, also beispielsweise in der Wohnung 3 dem Elektrizitätszähler 5a eine Trägerfrequenzsperre in Richtung zur Wohnung hin nachzuschalten, so daß die im Rahmen des in der Wohnung hin nachzuschalten, so daß die im Rahmen des in der Wohnung eingesetzten Systems verwendeten Informationstelegramme in ihrer Ausbreitung auf diese Wohnung beschränkt bleiben. Solche Trägerfrequenzsperren und ihre Installation stellen jedoch einen zusätzlichen Aufwand dar, der bei einem erfindungsgemäß ausgestatteten System entfällt.

Zu diesem Zweck ist in Verbindung mit jedem System eine Überwachungseinheit vorgesehen, die in der Wohnung 3 mit dem Bezugszeichen 17a belegt ist. Diese Überwachungseinheit 17a ist einerseits über die Steckdose 7a mit dem in der Wohnung 3 installierten elektrischen Netz 6a, andererseits über die Leitung 18a mit der Zentralstation 12a verbunden, wobei die Leitung 18a das Betriebssignal der Zentralstation 12a führt, das aktiv ist, solange die Zentralstation 12a ein Informationstelegramm ins elektrische Netz 6a einspeist.

Da bei der in Fig. 1 dargestellten Konfiguration keine Trägerfrequenzsperren mehr vorgesehen sind, können solche Informationstelegramme den unmittelbaren Bereich der Wohnung, in dem das erfindungsgemäße System eingesetzt ist, verlassen und sind auch im installierten elektrischen Netz von benachbarten Wohnungen bzw. Gebäuden vorhanden. Das führt solange nicht zu Schwierigkeiten, solange beispielsweise die Zentralstation 12a in ihrem Informationstelegramm ein wählbare für das in der Wohnung 3 eingesetzte System spezifische Teilfolge von Digitalsignalen, den « Hauscode », aufweist, der sich von dem beispielsweise in der Wohnung 4 für das System gewählten unterscheidet ; denn in den Unterstationen 13a bis 16a ist neben der speziellen Adresse dieser Unterstationen auch die für das in der Wohnung 3 eingesetzte System spezifische Teilfolge von Digitalsignalen, der « Hauscode », abgelegt, so daß jede dieser Unterstationen nur dann anspricht, wenn das eingehende Informationstelegramm mit dem eingespeicherten « Hauscode » versehen ist. Wählt aber der Wohnungsinhaber der Wohnung 4 — fahrlässig oder absichtlich — für die Zentralstation 12b bei der Abgabe eines Informationstelegramms den in der Wohnung 3 vorhandenen « Hauscode », dann kann er — wenn das Informationstelegramm auch im Adreßteil mit einer Adresse der Unterstationen 13a bis 16a in der Wohnung 3 übereinstimmt — von seiner Wohnung aus eine Fernsteuerung von elektrischen Geräten der Nachbarwohnung vornehmen, sofern keine Überwachungseinheit 17a vorgesehen ist. Dies wird durch das erfindungsgemäße System zuverlässig ausgeschlossen.

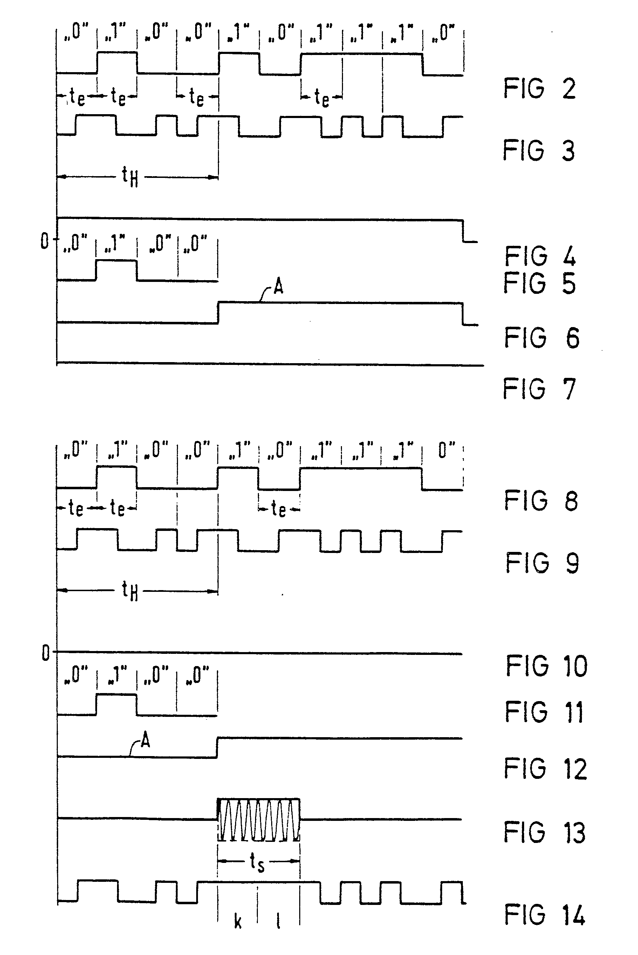

Die Wirkungsweise der Überwachungseinheit 17a soll nun im folgenden anhand der in den Fig. 2 bis 7 dargestellten Impulstelegramme näher erläutert werden, für den Fall, daß auf dem installierten elektrischen Netz 6a in der Wohnung 3 ein Informationstelegramm vorhanden ist, das aus der wohnungseigenen Zentralstation 12a stammt und für eine der in dieser Wohnung 3 vorgesehenen Unterstationen 13a bis 16a bestimmt ist.

Ein Steuerungsvorgang für eine der Unterstationen 13a bis 16a umfaßt jeweils zwei aufeinanderfolgende Informationstelegramme, wobei durch das erste Informationstelegramm die entsprechende Unterstation adressiert wird und durch das darauffolgende zweite Informationstelegramm ein Operationsbefehl, beispielsweise in Ein- oder Ausschaltbefehl, für die adressierte Unterstation übertragen wird.

In Fig. 2 ist ein Beispiel für ein in der Zentralstation 12a generiertes Informationstelegramm zunächst im redundanzfreien Binärcode dargestellt. Hierbei wird eine Folge von Binärzeichen oder Digitalsignalen mit den logischen Werten « 0 » bzw. « 1 » abgegeben, wobei die Dauer jedes dieser Digitalsignale $t_e$ ist. Die für das in der Wohnung 3 wirkende System gewählte spezifische Teilfolge von Digitalsignalen, der « Hauscode », besteht im Fall der Fig. 2 aus einer Folge von vier Digitalsignalen mit der Gesamtdauer $t_H$ und der logischen Zeichenfolge « 0 »-« 1 »-« 0 »-« 0 » am Anfang des Informationstelegramms. Die anschließende Folge von Digitalsignalen kann die Adresse einer der Unterstationen 13a bis 16a darstellen oder auch als Operationsbefehl nach bereits vorangehender Adressierung einer dieser Unterstationen dienen. Darüber hinaus wird darauf hingewiesen, daß das hier aus Gründen der besseren Übersichtlichkeit vereinfacht dargestellte Informationstelegramm üblicherweise noch vor der den « Hauscode » darstellenden Zeichenfolge eine den Beginn des Telegramms kennzeichnende Startimpulsfolge aufweist.

Fig. 3 zeigt die Folge von Digitalsignalen, die nach Umcodierung des in Fig. 2 dargestellten Ursprungssignals in den Biphase-Code entsteht. Es ist leicht ersichtlich, daß die erste Informationseinheit « 0 » des in Fig. 2 dargestellten Informationstelegramms nunmehr im Biphase-Code als Zeichenfolge « 0 »-« 1 » erscheint. Ganz analog erscheint die zweite Informationseinheit « 1 » des Informationstelegramms Fig. 2 im Biphase-Code in Fig. 3 als Zeichenfolge « 1 »-« 0 ». Die Unterstationen 13a bis 16a sind — wie bereits erwähnt — mit einer Codeprüfschaltung ausgestattet, die eine Verletzung des Biphase-Codes kenntlich macht. Eine solche Verletzung liegt beispielsweise dann vor, wenn während der Zeit $t_e$ für eine Informationseinheit im redundanzfreien Binärcode (Fig. 2) zwei den logischen Wert « 1 » oder zwei den logischen Wert « 0 » darstellende Digitalsignale im Biphase-Code auftreten.

Fig. 4 zeigt das Betriebssignal, das — da ja die Zentralstation 12a aktiv sein soll — von der Zentralstation 12a über die Leitung 18a an die Überwachungseinheit abgegeben wird. Es sei angemerkt, daß die Überwachungseinheit 17a nicht notwendigerweise als separate Baueinheit aufgeführt sein muß, sondern auch integraler Bestandteil der Zentralstation 12a sein kann.

Fig. 5 zeigt nochmals den « Hauscode » für die Wohnung 3, der in einem Speicher, der vorzugsweise als Festwertspeicher ausgebildet ist, der Überwachungseinheit 17a abgelegt ist.

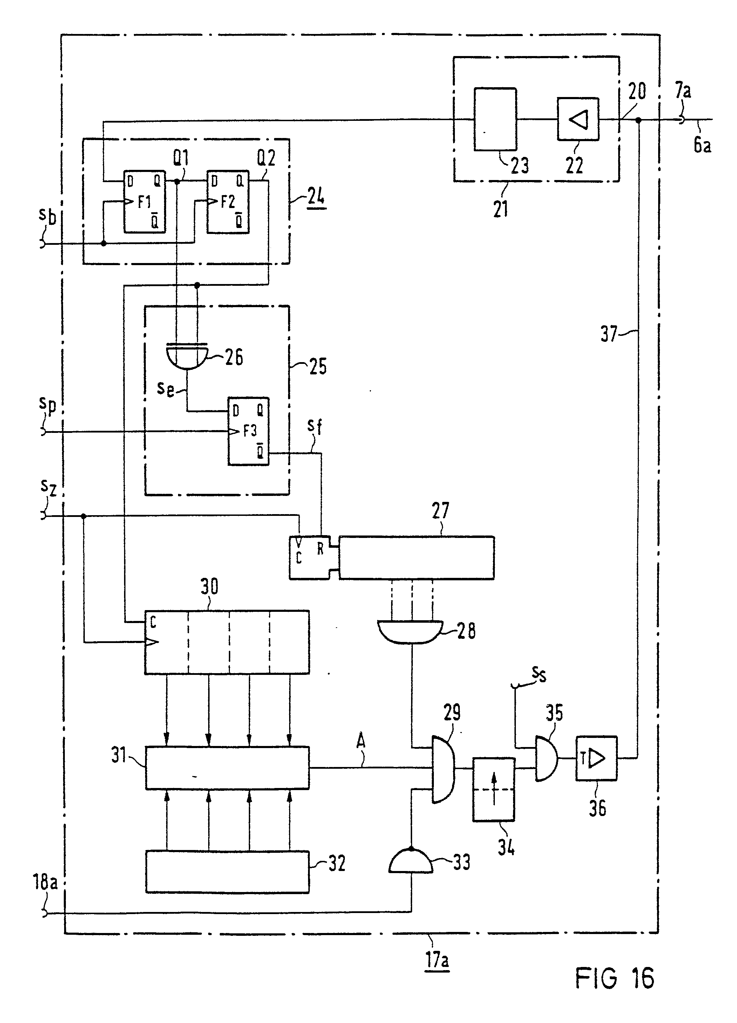

Da im vorliegenden Fall das auf dem in der Wohnung 3 installierten elektrischen Netz 6a vorhandene Informationstelegramm, das über einen in Fig. 16 dargestellten Empfangsteil 21 in der Überwachungseinheit 17a eingeht, bezüglich des « Hauscode » mit dem in der Überwachungseinheit 17a abgespeicherten « Hauscode » übereinstimmt, entsteht in einer in Fig. 16 dargestellten Vergleichseinrichtung 30-32 in der Überwachungseinheit 17a am Ende der Zeit $t_H$ das in Fig. 6 dargestellte Signal, das der Bedeutung « Hauscode erkannt » entspricht.

Da das im elektrischen Netz 6a der Wohnung 3 vorhandene Impulstelegramm bezüglich des « Hauscodes » mit dem in dieser Wohnung verwendeten « Hauscode » übereinstimmt und darüber hinaus das den aktiven Zustand der Zentralstation 12a anzeigende Betriebssignal (Fig. 4) vorhanden ist, bleibt aufgrund einer konjunktiven logischen Verknüpfung des negierten Betriebssignals mit dem Signal « Hauscode erkannt » der Ausgang der Überwachungseinheit 17a inaktiv, so daß kein codeverletzendes Signal über die Steckdose 7a in das installierte Netz 6a abgegeben wird, so daß das einlaufende Informationstelegramm unverändert bleibt.

Ganz anders ist das in dem anhand der Fig. 8 bis 14 dargestellten Fall, in dem ein fremdes Informationstelegramm, beispielsweise von der Zentralstation 12b der Wohnung 4 stammend, im installierten Netz 6a der Wohnung 3 eingeht, ohne daß die zugehörige Zentralstation 12a aktiv ist, wobei das Informationstelegramm bezüglich des « Hauscodes » mit dem in der Wohnung 3 verwendeten übereinstimmen soll.

Fig. 8 zeigt dieses in der Wohnung 3 auf den installierten Netz 6a vorhandene Informationstelegramm im redundanzfreien Binärcode, Fig. 9 das Informationstelegramm im Biphase-Code. Die in den Fig. 8 und 9 dargestellten Informationstelegramme decken sich mit den in Fig. 2 und 3 dargestellten. Aus Gründen der besseren Übersichtlichkeit ist die Trägerfrequenz, deren Umhüllende das in den Fig. 3 und 9 dargestellte Informationstelegramm darstellt, nicht eingezeichnet.

Da die in der Wohnung 3 befindliche Zentralstation 12a — wie oben bereits erwähnt — im vorliegenden Fall nicht aktiv ist, fehlt gegenüber der Fig. 4 nunmehr in der Fig. 10 das Betriebssignal der Zentralstation 12a, so daß über die Leitung 18a der Überwachungseinheit 17a lediglich ein Null-Signal zugeführt wird.

In Fig. 11 ist wiederum der im Speicher der Überwachungseinheit 17a fest vorgewählt « Hauscode » dargestellt, der mit dem « Hauscode »-Teil des im installierten Netz 6a der Wohnung 3 eingehenden Informationstelegramms übereinstimmt (Fig. 8).

Nach der die Dauer des « Hauscodes » bestimmenden Zeitspanne $t_H$ wird in der Überwachungseinheit 17a das in Fig. 12 dargestellte Signal « Hauscode erkannt » erzeugt. Durch die konjunktive Verknüpfung des invertierten Betriebssignals (Fig. 10) mit dem in Fig. 12 dargestellten Signal « Hauscode erkannt » wird ein Triggersignal erzeugt, das den in der Überwachungseinheit 17a vorhandenen Sendeteil auslöst. Dieser Sendeteil emittiert daraufhin einen trägerfrequenten Sinuswellenzug der Dauer $t_S$, der über die Steckdose 7a in das in der Wohnung 3 installierte Netz 6a eingekoppelt wird und über den Elektrizitätszähler 5a sowie den Elektrizitätszähler 5b auch in das in der Wohnung 4 installierte elektrische Netz 6b einläuft. Dieser Sinuswellenzug (Burst) weist im Falle des Ausführungsbeispiels die Dauer zweier Informationseinheiten $t_e$ des in Fig. 8 dargestellten Informationstelegramms im redundanzfreien Binärcode auf. Dieser Sinuswellenzug ist in Fig. 13 dargestellt. Durch die Überlagerung dieses Sinuswellenzuges und des im installierten Netz 6a der Wohnung 3 einlaufenden Informationstelegramms wird das letztere in seiner Struktur verändert. Diese Strukturänderung tritt — wie in Fig. 14 vereinfacht dargestellt — an den beiden sich an den « Hauscode » anschließenden Zeitplätzen k und l auf une stellt — vereinfacht gesagt — eine Auffüllung der jeweils den logischen Wert « 0 » darstellenden Impulslücken des im Biphase-Code vorliegenden Informationstelegramms dar, wie aus dem Vergleich der Figuren 9 und 14 ersichtlich ist. Es tritt auch an den Stellen der im Biphase-Code auf den Zeitplätzen k und l bereits ohnehin vorhandenen Impulse eine Pegelerhöhung durch die Überlagerung des von der Sendestufe emittierten Sinuswellenzuges auf, die jedoch in Fig. 14 nicht eingezeichnet ist und im praktischen Fall durch die Dynamik der in den Unterstationen 13a bis 16a vorhandenen Empfangsteile ohne weiteres bewältigt wird. Das von den Unterstationen 13a bis 16a nunmehr « gesehene » Informationstelegramm weist auf den Zeitplätzen k und l eine im Biphase-Code verbotene Codeverletzung auf, die zu einem sofortigen Abbruch der Auswertung des eingehenden Informationstelegramms in diesen Unterstationen führt. Somit kann durch das in Fig. 8 dargestellte, von der Zentranstation 12b der Wohnung 4 stammende Informationstelegramm in der Wohnung 3 keine Schalt- oder Steuerhandlung ausgelöst werden.

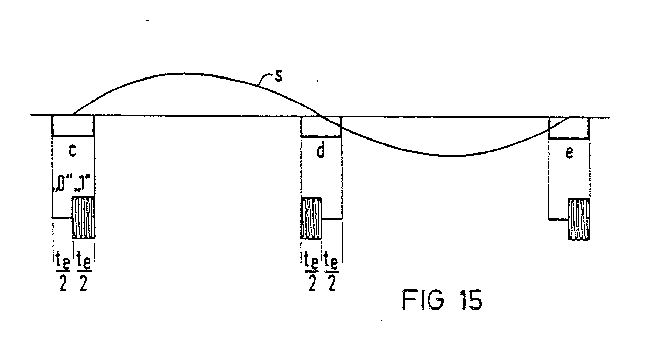

Fig. 15 zeigt beispielshaft die mit den Null-Durchgängen der Netzwechselspannung s synchronisierte Übertragung der Informationseinheiten eines Informationstelegramms im Biphase-Code für die ersten drei Informationseinheiten des « Hauscode » — Teils der in den Fig. 2 und 8 dargestellten Informationstelegramme. Durch die Null-Durchgänge der Netzwechselspannung s werden drei Zeitplätze c, d und e definiert, die jeweils den Nulldurchgang der Netzwechselspannung mittig enthalten. Durch die Zentralstation 12a wird auf dem Zeitplatz c die dem logischen Wert « 0 » entsprechende erste Informationseinheit des « Hauscodes » im Biphase-Code als logische Wertfolge « 0 »-« 1 » übertragen, wobei der logische Wert « 0 » als Fehlen eines trägerfrequenten Sinuswellenzuges während der ersten Zeitspanne $t_e/2$, der logische Wert « 1 » als das Auftreten eines trägerfrequenten Sinuswellenzuges nur während der ersten Zeitspanne $t_e/2$ erfolgt. Auf dem Zeitplatz d wird während des anschließenden Nulldurchgangs der Netzwechselspannung s die den logischen Wert « 1 » darstellende zweite Informationsheit des « Hauscode »-Teils der in den Fig. 2 und 8 dargestellten Informationstelegramme im Biphase-Code durch die Zentralstation 12a in das installierte Netz 6a eingespeist. Hierbei wird während der ersten Hälfte $t_e/2$ des Zeitplatzes d ein trägerfrequenter Sinuswellenzug in das installierte Netz 6a eingespeist, der während der anschließenden zweiten Hälfte $t_e/2$ dieses Zeitplatzes von einer Sendepause für die Dauer $t_e/2$ innerhalb des Zeitplatzes d gefolgt · ist. Beim nächsten Nulldurchgang der Wechselspannung s erfolgt ganz analog auf dem Zeitplatz e wiederum die Übertragung der anschließenden Informationseinheit des « Hauscode »-Teils mit dem logischen Wert « 0 ». Durch die Übertragung der Informationsheinheiten eines Informationstelegramms während der Null-Durchgänge der Netzwechselspannung s ist eine einfache Synchronisierung zwischen der Zentralstation 12a und den zugehörigen Unterstationen 13a bis 16a ermöglicht, wobei gleichzeitig in diesen Zeitpunkten die von anderen in der Wohnung 3 vorhandenen Geräten hervorgerufenen Impedanzeinbrüche minimal sind. Damit werden Störungen der Informationsübertragung weitgehend vermieden.

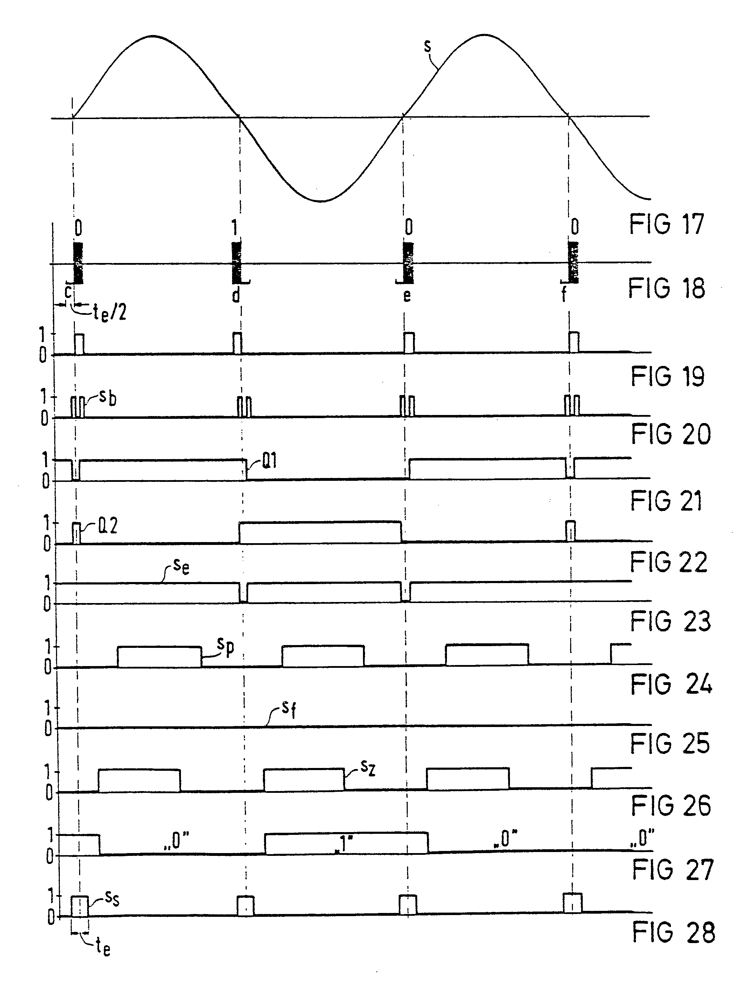

Fig. 16 zeigt den prinzipiellen Aufbau einer Überwachungseinheit am Beispiel der Überwachungseinheit 17a, wobei die Übertragung der Informationseinheiten eines Informationstelegramms mit den Null-Durchgängen der Netzwechselspannung s synchronisiert sein soll, wie in Fig. 15 dargestellt ist. Die in der Überwachungseinheit 17a auftretenden Signalverläufe sind in den Fig. 17 bis 28 dargestellt. Hierbei zeigt Fig. 17 nochmals die Netzwechselspannung s, deren Null-Durchgänge zur Synchronisierung der Übertragung der einzelnen Informationseinheiten dienen.

Die Überwachungseinheit 17a ist über die Steckdose 7a an das in der Wohnung 3 installierte elektrische Netz 6a angeschlossen. Ein auf diesem Netz vorhandenes Informationstelegramm wird über die Leitung 20 dem Empfangsteil 21 zugeführt. Der « Hauscode »-Teil auf den vier Zeitplätzen c bis f in Fig. 18 veranschaulicht. Hierbei wird auf den einzelnen Zeitplätzen c bis f im Biphase-Code die logische Zeichenfolge « 0 »-« 1 »-« 0 »-« 0 » übertragen. Der Empfangsteil 21 beinhaltet einen auf die Trägerfrequenz des Informationstelegramms abgestimmten selektiven Empfänger 22 sowie einen nachgeschalteten Demodulator 23. Am Ausgang des Demodulators 23, der auch den Ausgang des Empfangsteil 21 bildet, steht das demodulierte Informationstelegramm im Biphase-Code zur Verfügung, dessen « Hauscode »-Teil nochmals in Fig. 19 dargestellt ist.

Das Informationstelegramm wird anschließend in dem Biphase-Decoder 24 codiert. Dieser Biphase-Decoder 24 ist im Ausführungsbeispiel als 2-bit-Schieberegister ausgebildet, bestehend aus den D-Flip-Flops F1 und F2. Der D-Eingang des Flip-Flops F1 bildet den Eingang des Biphase-Decoders 24. Das auf dem nichtinvertierenden Ausgang Q vorhandene Ausgangssignal Q1 ist dem D-Eingang des zweiten Flip-Flops F2 zugeführt, an dessen nichtinvertierendem Ausgang Q das Ausgangssignal Q2 zur Verfügung steht. Die Takteingänge beider Flip-Flops F1 und F2 sind mit dem in Fig. 20 dargestellten Biphase-Taktsignal $s_b$ beaufschlagt. Das Biphase-Taktsignal $s_b$ besteht aus einem Doppelimpuls für jeden Null-Durchgang der Netzwechselpannung, wobei jeder der Einzelimpulse jedes Doppelimpulses kürzer als die Zeitspanne $t_e/2$ ist und mit dem Ende jeder Zeitspanne $t_e/2$ abschließt. Die Ausgangssignale Q1 und Q2 des Biphase-Decoders 24 sind in den Figuren 21 und 22 dargestellt. Diese Signale Q1 und Q2 stellen abgesehen von einem synchronisierten Bereich $t_e/2$ um die Null-Durchgänge der Netzwechselspannung in nichtinvertierter und invertierter Form den « Hauscode »-Teil eines Informationstelegramms im redundanzfreien Binärcode bar, wenn in eingehenden Informationstelegramm keine Codeverletzung des Biphase-Codes enthalten ist. Die Taktung der beiden Flip-Flops F1 und F2 erfolgt jeweils durch die ansteigende Flanke der Doppelimpulse des Biphase-Taktsignals $s_b$. Wegen der Schaltzeit des Flip-Flops F1 übernimmt das zweite Flip-Flop F2 jeweils das Ausgangssignal Q1 der ersten Flip-Flops F1, das zeitlich vor der ansteigenden Flanke des Biphase-Taktsignals $s_b$ am Ausgang Q des ersten Flip-Flops F1 ansteht.

Die Ausgangssignale Q1 und Q2 des Biphase-Decoders 24 sind einem Biphase-Codeprüfer 25 zugeführt und zwar einem im Biphase-Codeprüfer 25 befindlichen Exclusiv-ODER-Gatter 26. Das Ausgangssignal $s_e$ des Exclusiv-ODER-Gatters 26 ist dem D-Eingang eines weiteren D-Flip-Flops F3 zugeführt, das ebenfalls zum Biphase-Codeprüfer 25 gehört. Dieses Ausgangssignal $s_e$ ist in Fig. 23 dargestellt. Dieses Ausgangssignal $s_e$ des Exclusiv-ODER-Gatters 26 ist — sofern das eingehende Impulstelegramm nicht mit einer Verletzung des Biphase-Codes behaftet ist — außerhalb einer Zeitspanne von der Dauer $t_e/2$ um den Null-Durchgang der Netzwechselspannung ein Signal mit dem logischen Wert « 1 », wie aus Fig. 23 ersichtlich ist. Dem Takteingang des weiteren D-Flip-Flops F3 ist ein Prüftaktsignal $s_p$ zugeführt, das in Fig. 24 dargestellt ist. Dieses Prüftaksignal $s_p$ ist ein zwischen den logischen Werten « 0 » und « 1 » schwankendes Rechtecksignal, dessen Frequenz der doppelten Netzfrequenz entspricht und das gegenüber den Null-Durchgängen der Netzwechselspannung s eine Phasenverschiebung von $\pi/4$ aufweist. Wesentlich ist jedoch bei diesem Prüftaktsignal $s_p$ lediglich, daß es eine Übernahme des Ausgangssignals $s_e$ des Exclusiv-ODER-Gatters 26 in das Flip-Flop F3 bewirkt, wenn die durch den Doppelimpuls des Biphase-Taktsignals $s_b$ ausgelösten Schaltvorgänge im Biphase-Taktsignals $s_b$ ausgelösten Schaltvorgänge im Biphase-Decoder 24 beendet sind. Das am invertierenden Ausgang $\bar{Q}$ anstehende Signal $s_f$ des Flip-Flops F3 ist in Fig. 25 für den Fall dargestellt, daß das im Biphase-Decoder 24 eingehende Informationstelegramm nicht mit einer Verletzung des Biphase-Codes behaftet ist. In diesem Fall ist das Signal $s_f$ ein Dauersignal mit dem logischen Wert « 0 ».

Das Signal $s_f$ ist dem Rücksetzeingang R eines Telegrammzählers 27 zugeführt, dessen Zähleingang C mit dem Zähltaktsignal $s_z$ beaufschlagt ist. Dieses Zähltaktsignal $s_z$ ist in Fig. 26 dargestellt. Das Zähltaktsignal $s_z$ ist ebenfalls ein zwischen den logischen Werten « 0 » und « 1 » hin- und herkippendes Rechtecksignal mit doppelter Netzfrenquenz, dessen Phasenverschiebung gegenüber den Null-Durchgängen der Netzwechselspannqung s $\pi/8$ beträgt. Wesentlich ist hierbei jedoch lediglich, daß im Anschluß an jeden der beispielhaft dargestellten Zeitplätze c, d, e... eines Informationstelegramms jeweils der Wert des Telegrammzählers um eine Einheit erhöht wird. Der Telegrammzähler 27 zählt also die Zahl der im Biphase-Code übermittelten Informationseinheiten, wobei es ausreichend ist, wenn seine Zählkapazität sich auf die Zahl der für den « Hauscode »-Teil eines Informationstelegramms entsprechenden Informationseinheiten beschränkt, also im vorliegenden Fall auf die Zahl 4.

Solange der « Hauscode »-Teil eines Informationstelegramms keine Verletzung des Biphase-Codes aufweist, ist das Ausgangssignal $s_e$ des Exclusiv-ODER-Gatters 26 auf dem logischen Wert « 1 », tritt dagegen eine Codeverletzung auf, nimmt das Ausgangssignal $s_e$ den logischen Wert « 0 » an. Im erstgenannten Fall ist das Ausgangssignal $s_f$ am invertierenden Ausgang $\bar{Q}$ des Flip-Flops F3 auf dem logischen Wert « 0 », im letztgenannten Fall (Codeverletzung) ändert sich das Ausgangssignal $s_f$ auf den logischen Wert « 1 ». Ein solcher Signalwechsel des Ausgangssignals $s_f$ vom logischen Wert « 0 » auf den logischen Wert « 1 » wirkt als Rücksetzsignal für den Telegrammzähler 27. Bei dieser Betrachtung wird vorausgesetzt, daß der jedem eigentlichen Informationstelegramm vorangehende Startimpuls für den Biphase-Code codeverletzend ist, also auf einem Zeitplatz entweder eine « Doppelnull » (kein Sendesignal) oder eine « Doppeleins » (Dauerimpuls für die gesamte Dauer eines Zeitplatzes $t_e$) beinhaltet. Damit wird bewirkt, daß durch den Starkimpuls jedes eigentlichen Informationstelegramms der Telegrammzähler auf den Wert Null zurückgesetzt wird. Tritt im « Hauscode »-Teil eines Informationstelegramms eine solche Codeverletzung auf, wird der Telegrammzähler natürlich erneut auf den Wert Null zurückgesetzt.

Der Inhalt des Telegrammzählers wird über ein Abfrageglied 28 dauernd überprüft. Dieses Abfrageglied 28 kann beispielsweise als UND-Gatter ausgebildet sein, dessen Eingänge mit den Ausgängen der Speicherzellen des Telegrammzählers verbunden sind. Entspricht der Inhalt des Telegrammzählers 27 der Zahl der Informationseinheiten (redundanzfrei) des « Hauscode »-Teils eines Informationstelegramms, also im vorliegenden Fall der Zahl 4, dann liefert dieses Abfrageglied 28 ein Ausgangssignal mit der Bedeutung « Hauscode-Teil ohne Codeverletzung vollinhaltlich eingegangen ». Über das Abfrageglied 28 wird somit aus dem Zählerstand des Telegrammzählers 27 der Zeitpunkt ermittelt, zu dem eine der Länge des « Hauscode »-Teils entsprechende Anzahl von Informationseinheiten eingegangen ist. Das Ausgangssignal des Abfragegliedes 28 ist dem einen Eingang eines UND-Gatters 29 zugeführt.

Das Ausgangssignal Q2 des Biphase-Decoders 24 ist auch dem Dateneingang C eines zur Vergleichseinrichtung mit den Elementen 30, 31, 32 gehörigen Telegrammspeichers 30 zugeführt, dessen Takteingang mit dem Zähltaktsignal $s_z$ beaufschlagt ist. Der Telegrammspeicher 30 muß mindestens eine der Anzahl der Informationseinheiten des « Hauscodes » entsprechende· Anzahl von Speicherzellen aufweisen, im vorliegenden Fall also vier. Die Ausgänge der Speicherzellen des Telegrammspeichers 30 sind an die ersten Eingänge eines der Vergleichseinrichtung zugehörigen elektronischen Komparators 31 angeschlossen. An die anderen Eingänge des Komparators 31 sind die Ausgänge der Speicherzellen eines Speichers 32 angeschlossen, der als Festwertspeicher mit von außen vorgebbarem Speicherinhalt ausgebildet ist. In diesen Speicher 32 wird vom Benutzer des in der Wohnung 3 wirksamen Systems der gewählte « Hauscode » eingegeben. Im vorliegenden Ausführungsbeispiel beinhaltet der Speicher 32 damit die logische Wertfolge « 0 »-« 1 »-« 0 »-« 0 ». Der elektronische Komparator 31 liefert an seinem Ausgang bei Übereinstimmung des « Hauscode »-Teils eines eingehenden Informationstelegramms mit dem im Speicher 32 befindlichen « Hauscode » das logische Signal A mit der Bedeutung « Hauscode erkannt », wie es beispielsweise in den Fig. 6 und 12 dargestellt ist. Die zeitliche Abfolge der bei einem zutreffenden « Hauscode »-Teil eines eingehenden Informationstelegramm in den Telegrammspeicher 30 eingeschriebenen Informationen ist in Fig. 27 dargestellt.

Das Ausgangssignal des elektronischen Komparators 31 ist dem zweiten Eingang des UND-Gatters 29 zugeführt, an dessen dritten Eingang das über die Leitung 18a von der Zentralstation 12a stammende, in der Invertierstufe 33 invertierte Betriebssignal ansteht. Der Ausgang des UND-Gatters 29 ist mit dem Eingang einer monostabilen Kippstufe 34 verbunden. Diese monostabile Kippstufe 34 wird dann und nur dann gesetzt, wenn das Abfrageglied den Eingang einer dem « Hauscode »-Teil entsprechenden Anzahl korrekter Informationseinheiten signalisiert, wenn zusätzlich der eingegangene « Hauscode » mit dem im Speicher 32 programmierten « Hauscode » übereinstimmt und wenn darüber hinaus die eigene Zentralstation 12a nicht aktiv ist, d. h. wenn das gerade eingehende Informationstelegramm mit passendem « Hauscode »-Teil von einer fremden Zentralstation stammt.

Die Dauer des instabilen Zustands der monostabilen Kippstufe 34 ist so bemessen, daß sie mindestens das Ende des anschließenden Zeitplatzes im Informationstelegramm einschließt, d. h. daß sie mindestens eine Halbperiode der Netzwechselspannung s umfaßt. Das Ausgangssignal der monostabilen Kippstufe 24 ist zusammen mit dem in Fig. 28 dargestellten Sendezeitsignal $s_s$ durch das UND-Gatter 35 konjunktiv verknüpft dem Triggereingang T des Sendeteils 36 zugeführt. Der Sendeteil 36 ist über die Ausgangsleitung 37 an die Steckdose 7a des in der Wohnung 3 installierten elektrischen Netzes angeschlossen. Das Sendezeitsignal $s_s$ ist jeweils mindestens für die Dauer $t_e$ eines Zeitplatzes auf dem logischen Wert « 1 », wobei die Zeitspanne $t_e$ hälftig vor dem Null-Durchgang der Netzwechselspannung s und hälftig nach dem Null-Durchgang der Netzwechselspannung s liegt. Der Sendeteil 36 wird jeweils für die gesamte Dauer, während der das Sendezeitsignal $s_s$ den logischen Wert « 1 » einnimmt aktiviert. Damit erzeugt der Sendeteil 36 auf dem sich an den « Hauscode »-Teil eines Informationstelegramms anschließenden Zeitplatz im Biphase-Code eine « Doppleins » (« 1 »-« 1 »), indem ein Sinuswellenzug der Trägerfrequenz der Mindestdauer $t_e$ emittiert wird. Damit tritt im Informationstelegramm im Biphase-Code zumindest an einer Stelle für die Darstellung einer Informationseinheit anstelle der ausschließlich zulässigen logischen Wertfolgen « 0 »-« 1 » oder « 1 »-« 0 » die im Biphase-Code nicht zugelassene logische Wertfolge « 1 »-« 1 ». Der vom Sendeteil 36 emittierte Sinuswellenzug kann sich natürlich auch über mehrere, jeweils für einen Zeitplatz vorgesehene Zeitspannen $t_e$ für jeweils eine Informationsheit erstrecken. In dem in Fig. 13 dargestellten Fall, bei dem die Informationseinheiten eines Informationstelegramms nicht in Anbindung an die Null-Durchgänge der Netzwechselspannung übertragen werden, sondern unmittelbar aufeinander folgen, wurde für die Dauer des Sinuswellenzuges $t_s$ die Dauer $2t_e$, d. h. die Dauer von zwei Informationseinheiten (Zeitplätzen) des Informationstelegramms im redundanzfreien Binärcode, gewählt. In jedem Fall wird somit durch die Wirkung der Überwachungseinheit 17a dann und nur dann, wenn in der Wohnung 3 ein fremdes Informationstelegramm eingeht, dessen « Hauscode »-Teil mit dem für das in der Wohnung 3 vorhandene System gewählten « Hauscode » übereinstimmt, in dem sich an den « Hauscode » anschließenden Telegrammteil ein codeverletzendes Signal einfügt, wodurch die Unterstationen 13a bis 16a sofort desaktiviert werden. Diese Unterstationen sind ebenfalls mit einem Biphase-Decoder und einem Biphase-Codeprüfer sowie einem Telegrammzähler ausgestattet, wobei diese Einheiten ebenso aufgebaut sein können, wie im Vorstehenden erläutert wurde.

Damit kann durch die Zentralstation eines gleichartigen, in einer Nachbarwohnung untergebrachten Systems, beispielsweise durch die Zentralstation 12b des in der Wohnung 4 untergebrachten Systems, kein Schalt- oder Steuervorgang in der anderen Wohnung 3 ausgelöst werden. Das eine Codeverletzung im gerade eingehenden Informationstelegramm bewirkende Ausgangssignal der Überwachungseinheit 17a bleibt jedoch in seiner Wirkung nicht auf das in der Wohnung 3 installierte elektrische Netz 6 beschränkt, sondern läuft über die elektrische Speiseleitung 1 auch in die in Nachbarwohnungen installierten elektrischen Netze, also beispielsweise in das elektrische Netz 6b der Wohnung 4, ein, von deren Zentralstation 12b das Fremdtelegramm stammen soll. Sind durch den Wohnungsinhaber der Wohnung 4 nun die Unterstationen 13b bis 16b auf den gleichen « Hauscode » eingestellt wie die in der Wohnung 3 befindlichen Unterstationen 13a bis 16a, dann werden wegen der durch die Überwachungseinheit 17a ins Informationstelegramm eingebrachten Codeverletzung auch die Unterstationen 13b bis 16b in der Wohnung 4 nicht auf die von der eigenen Zentralstation 12b abgegebenen Informationstelegramme reagieren, so daß auf diesem Wege der Wohnungsinhaber der Wohnung 4 feststellen kann, daß er einen bereits belegten Hauscode werwendet.

## Patentansprüche

1. System zur Übertragung von Informationstelegrammen, die in Form von Digitalsignalen codiert sind, wobei ein die Prüfung jeder Informationseinheit gestattender Code gewählt ist, mit einer Zentralstation (12a, 12b) und einer Reihe von Unterstationen (13a-16a, 13b-16b), an die die Informationstelegramme der Zentralstation (12a, 12b) über das elektrische Netz als Übertragungsweg (6a, 6b), der von weiteren gleichartigen Systemen genutzt wird, selektiv abgebbar sind, wobei jede Unterstation (13a-16a, 13b-16b) bereits aufgrund einer als fehlerhaft erkannten Informationseinheit die weitere Informationsauswertung abbricht und wobei jedes der Informationstelegramme eine wählbare, für das betreffende System spezifische Teilfolge von Digitalsignalen aufweist, die nicht am Ende der das Informationstelegramm darstellenden Gesamtfolge von Digitalsignalen auftritt, gekennzeichnet durch folgende Merkmale :

a) Die Zentralstation (12a, 12b) gibt während der Dauer eines jeden von ihr abgegebenen Informationstelegramms ein elektrisches Betriebssignal (18a) ab,

b) es ist eine Überwachungseinheit (17a, 17b) vorgesehen, der das Betriebssignal (18a) zugeführt ist,

c) die Überwachungseinheit (17a, 17b) enthält

aa) einen an den Übertragungsweg (6a, 6b) angeschlossenen Empfangsteil (21) für die Informationstelegramme,

bb) einen Speicher (32), in dem die für das betreffende System spezifische Teilfolge von Digitalsignalen abgelegt ist,

cc) eine Vergleichseinrichtung (30, 31, 32), in der das Informationstelegramm auf das Auftreten der für das betreffende System spezifischen Teilfolge von Digitalsignalen hin analysiert wird,

dd) einen ebenfalls an den Übertragungsweg (6a, 6b) angeschlossenen Sendeteil (36), der immer dann, wenn eine für das betreffende System spezifische Teilfolge von Digitalsignalen in einem eingehenden Informationstelegramm auftritt, ohne daß gleichzeitig das Betriebssignal (18a) vorhanden ist, ein eine Codeverletzung im Informationstelegramm bewirkendes Signal emittiert.

2. System nach Anspruch 1, dadurch gekennzeichnet, daß die Informationstelegramme als eine Trägerfrequenz modulierende Digitalsignale übertragen werden.

3. System nach Anspruch 1 oder 2, dadurch gekennzeichnet, daß als die Prüfung jeder Informationseinheit gestattender Code der Biphase-Code gewählt ist, bei dem der einer Informationseinheit zugeordnete logische Wert (« 0 » ; « 1 ») in invertierter Form (« 1 » ; « 0 ») wiederholt wird.

4. System nach einem der Ansprüche 1 bis 3, dadurch gekennzeichnet, daß das eine den einen logischen Wert (« 1 ») darstellende Digitalsignal als Sinuswellenzug ausgebildet ist.

5. System nach einem der Ansprüche 1 bis 4, dadurch gekennzeichnet, daß die für das betreffende System spezifische Teilfolge von Digitalsignalen am Anfang des Informationstelegramms liegt.

6. System nach einem der Ansprüche 2 bis 5, dadurch gekennzeichnet, daß der Empfangsteil (21) einen auf die Trägerfrequenz abgestimmten selektiven Empfänger (22) sowie einen Demodulator (23) umfaßt.

7. System nach einem der Ansprüche 1 bis 6, dadurch gekennzeichnet, daß jede Informationseinheit des Informationstelegramms im Bereich eines Null-Durchgangs der Netzspannung emittiert wird (Fig. 15).

8. System nach einem der Ansprüche 1 bis 7, dadurch gekennzeichnet, daß die Vergleichseinrichtung (30, 31, 32) einen elektronischen Telegrammspeicher (30) für zumindest die für das betreffende System spezifische Teilfolge von Digitalsignalen aufweist, dessen Eingang (C) mit dem Ausgang des Demodulators (23) verbunden ist und dessen Ausgang mit dem einen Eingang eines elektronischen Komparators (31) verbunden ist, an dessen zweitem Eingang der Speicher (32) angeschlossen ist.

9. System nach Anspruch 8, dadurch gekennzeichnet, daß der Telegrammspeicher (30) als Schieberegister ausbegildet ist.

10. System nach Anspruch 8 oder 9, dadurch gekennzeichnet, daß das Ausgangssignal (A) des Komparators (31) sowie das invertierte (33) Betriebssignal (18a) konjunktiv verknüpft (29) in Wirkverbindung mit dem Triggereingang (T) des Sendeteils (36) steht, das nach Triggerung zum Zeitpunkt des Auftretens der nächsten Informationseinheit einen Sinuswellenzug der Trägerfrequenz emittiert, dessen Dauer mindestens der Dauer einer Informationseinheit ($t_e$) im Biphase-Code entspricht.

11. System nach einem der Ansprüche 3 bis 10, dadurch gekennzeichnet, daß dem Ausgang des Empfangsteils (21) ein Biphase-Decoder (24) nachgeschaltet ist, dessen Ausgangssignal dem Eingang (C) des Telegrammspeichers (30) zugeführt ist.

12. System nach Anspruch 11, dadurch gekennzeichnet, daß der Biphase-Decoder (24) als aus zwei Flip-Flops (F1, F2) bestehendes zweistufiges Schieberegister ausgebildet ist.

13. System nach Anspruch 11 oder 12, dadurch gekennzeichnet, daß ein Biphase-Codeprüfer (25) vorgesehen ist, der eingangsseitig in Wirkverbindung mit dem Biphase-Decoder (24) steht und der ausgangsseitig bei Auftreten einer Codeverletzung im Informationstelegramm ein Rückstellsignal für einen Telegrammzähler (27) liefert, wobei der Telegrammzähler (27) den Eingang der für das betreffende System spezifischen Teilfolge von Digitalsignalen zählend erfaßt, und daß für den Inhalt des Telegrammzählers (27) ein Abfragegied (28) vorgesehen ist, dessen Ausgangssignal jeweils nach vollständigem Eingang der gesamten für das betreffende System spezifischen Teilfolge von Digitalsignalen ohne Codeverletzung aktiv ist, und daß das Ausgangssignal des Abfragegliedes (28) zusammen mit dem Ausgangssignal (A) des Komparators (31) und dem invertierten (33) Betriebssignal (18a) in einem UND-Gatter (29) konjunktiv verknüpft ist.

14. System nach Anspruch 13, dadurch gekennzeichnet, daß dem UND-Gatter (29) eine monostabile Kippstufe (34) nachgeschaltet ist, deren instabiler Zustand nach dem Setzen zumindest bis zum Abschluß der nächstfolgenden Informationseinheit im Informationstelegramm andauert.

15. System nach den Ansprüchen 7 und 14, dadurch gekennzeichnet, daß das Ausgangssignal der monostabilen Kippstufe (34) in einem weiteren UND-Gatter (35) konjunktiv verknüpft ist mit einem Signal, das ausschließlich im Bereich der Null-Durchgänge der Netzwechselspannung (s) für die Dauer ($t_e$) einer Informationseinheit aktiv ist, wobei das Ausgangssignal des weiteren UND-Gatters (35) den Sendeteil (36) in Betrieb setzt.

## Claims

1. A system for the transmission of information telegrams which are coded in the form of digital signals, where a code is selected which permits the checking of each information unit, with a central station (12a, 12b) and with a series of subsidiary stations (13a-16a, 13b-16b) to which the information telegrams of the central station (12a, 12b) can be selectively transmitted via the electric mains as transmission path (6a, 6b) which is used by other similar systems, where, as soon as an information unit is recognised as faulty each subsidiary station (13a-16a, 13b-16b) interrupts the information analysis and where each of the information telegrams contains a selectable subsidiary sequence of digital signals which is specific to the system in question and which does not occur at the end of the overall sequence of digital signals which represents the information telegram, characterised by the following features :

a) for the duration of each information telegram which it transmits, the central station (12a, 12b) emits an electrical operating signal (18a),

b) a monitoring unit (17a, 17b) is provided which is supplied with the operating signal (18a),

c) the monitoring unit (17a, 17b) includes

aa) a receiving section (21), connected to the transmission path (6a, 6b), for the information telegrams,

bb) a store (32) which stores the susbsidiary sequence of digital signals which is specific to the system in question,

cc) a comparator device (30, 31, 32) in which the information telegram is analysed on the occurrence of the subsidiary sequence of digital signals which is specific to the system in question,

dd) a transmitting section (36) which is likewise connected to the transmission path (6a, 6b) and which emits a signal which produces a code infringement in the information telegram whenever a subsidiary sequence of digital signals, which is specific to the system in question, occurs in an incoming information telegram without the simultaneous presence of the operating signal (18a).

2. A system as claimed in claim 1, characterised in that the information telegrams are transmitted as digital signals which modulate a carrier frequency.

3. A system as claimed in claim 1 or 2, characterised in that the biphase code is selected as the code which permits the checking of each information unit, in which biphase code the logic value (« 0 » ; « 1 »), assigned to an information unit, is repeated in inverted form (« 1 » ; « 0 »).

4. A system as claimed in one of the claims 1 to 3, characterised in that the first digital signal which represents a logic value (« 1 ») takes the form of a sine wave train.

5. A system as claimed in one of the claims 1 to 4, characterised in that the subsidiary sequence of digital signals which is specific to the system in question occurs at the start of the information telegram.

6. A system as claimed in one of the claims 2 to 5, characterised in that the receiving section (21) comprises a selective receiver (22) which is tuned to the carrier frequency, and a demodulator (23).

7. A system as claimed in one of the claims 1 to 6, characterised in that each information unit of the information telegram is emitted in the region of a zero transition of the mains voltage (Fig. 15).

8. A system as claimed in one of the claims 1 to 7, characterised in that the comparator device (30, 31, 32) has an electronic telegram store (30) for at least the subsidiary sequence of digital signals which is specific to the system in question, the output (C) of which store is connected to the output of the demodulator (23), and the output of which store is connected to the first input of an electronic comparator (31) whose second input is connected to the store (32).

9. A system as claimed in claim 8, characterised in that the telegram store (30) comprises a shift register.

10. A system as claimed in claim 8 or 9, characterised in that the output signal (A) of the comparator (31) and the inverted (33) operating signal (18a), conjunctively logic-linked (29), are actively connected to the trigger input (T) of the transmitting section (36) which, following triggering, at the time of the occurrence of the next information unit, emits a sine wave train of the carrier frequency whose duration corresponds at least to the duration fo one information unit ($t_e$) in the biphase code.

11. A system as claimed in one of the claims 3 to 10, characterised in that the output of the receiving section (21) is connected to a biphase decoder (24) whose output signal is fed to the input (C) of the telegram store (30).

12. A system as claimed in claim 11, characterised in that the biphase decoder (24) is designed as a two-stage shift register comprising two flip-flops (F1, F2).

13. A system as claimed in claim 11 or 12, characterised in that a biphase code checking device (25) is provided which at its input end is actively connected to the biphase decoder (24) and which at its output end supplies a reset signal for a telegram counter (27) on the occurrence of a code infringement in the information telegram, where the telegram counter (27) counts the arrival of the subsidiary sequence of digital signals which is specific to the system in question, and that for the content of the telegram store (27) an interrogation element (28) is provided whose output signal is active following the complete arrival of the entire subsidiary sequence of digital signals which is specific to the system in question without a code infringement, and that the output signal of the interrogation element (28) is conjunctively logic-linked, in an AND-gate (29), to the output signal (A) of the comparator (31) and the inverted (33) operating signal (18a).

14. A system as claimed in claim 13, characterised in that the AND-gate (29) is connected at its output end to a monostable flip-flop (34) whose unstable state following setting continues at least until the conclusion of the next information unit in the information telegram.

15. A system as claimed in claims 7 an 14, characterised in that the output signal of the monostable flip-flop (34) is conjunctively logic-linked, in a further AND-gate (35), to a signal which is active exclusively in the region of the zero transitions of the mains alternating voltage (s) for the duration ($t_e$) of one information unit, where the output signal of the further AND-gate (35) sets the transmitting section (36) in operation.

## Revendications

1. Système pour transmettre des télégrammes d'informations, qui sont codés sous la forme de signaux numériques, et dans lequel un code permettant le contrôle de chaque unité d'information est choisi, et qui comporte un poste central (12a, 12b) et une série de postes secondaires (13a-16a, 13b-16b), auxquels les télégrammes d'informations du poste central (12a, 12b) peuvent être délivrés de façon sélective par l'intermédiaire du réseau électrique servant de voie de transmission (6a, 6b) qui est utilisée par d'autres systèmes semblables, et dans lequel chaque poste secondaire (13a-16a, 13b-16b) interrompt déjà sur la base d'une unité d'information identifiée comme erronée, la suite de l'exploitation des informations, et dans lequel chacun des télégrammes d'informations comporte une suite partielle de signaux numériques, qui est spécifique pour le système considéré et qui n'apparaît pas à la fin de l'ensemble de la suite de signaux numériques représentant le télégramme d'informations, caractérisé par les caractéristiques suivantes :

a) le poste central (12a, 12b) délivre un signal de service électrique (18a), pendant la durée de chaque télégramme d'informations, qui lui est délivré,

b) il est prévu une unité de contrôle (17a, 17b) à laquelle le signal de service (18a) est envoyé,

c) l'unité de contrôle (17a, 17b) contient

aa) une partie réception (21) raccordée à la voie de transmission (6a, 6b) et prévue pour les télégrammes d'informations,

bb) une mémoire (32) dans laquelle se trouve mémorisée la suite partielle de signaux numériques, qui est spécifique au système considéré,

cc) un dispositif comparateur (30, 31, 32), dans lequel le télégramme d'informations est analysé du point de vue de l'apparition de la suite partielle de signaux numériques, qui est spécifique pour le signal considéré,

dd) une partie émission (36) également raccordée à la voie de transmission (6a, 6b) et qui émet un signal provoquant une violation de code dans le télégramme d'informations, chaque fois qu'il apparaît, dans un télégramme d'informations arrivant, une suite partielle de signaux numériques, spécifique pour le système considéré, sans que soit présent simultanément le signal de service (18a).

2. Système suivant la revendication 1, caractérisé par le fait que les télégrammes d'informations sont transmis sous la forme de signaux numériques modulant une fréquence porteuse.

3. Système suivant la revendication 1 ou 2, caractérisé par le fait que l'on choisit comme code permettant le contrôle de chaque unité d'information, le code biphase pour lequel la valeur logique (« 0 » « 1 » k), associée à l'unité d'information, est répétée sous forme inversée (« 1 » ; « 0 »).

4. Système suivant l'une des revendications 1 à 3, caractérisé par le fait qu'un signal numérique représentant une valeur logique (« 1 ») est réalisé sous la forme d'un train d'ondes sinusoïdales.

5. Système suivant l'une des revendications 1 à 4, caractérisé par le fait que la suite partielle de signaux numériques, qui est spécifique pour le système considéré, est située au début du télégramme d'informations.

6. Système suivant l'une des revendications 2 à 5, caractérisé par le fait que la partie réception (21) comporte un récepteur sélectif (22), réglé sur la fréquence porteuse, ainsi qu'un démodulateur (23).

7. Système suivant l'une des revendications 1 à 6, caractérisé par le fait que chaque unité d'information du télégramme d'informations est émise au voisinage de l'annulation de la tension du réseau (figure 15).

8. Système suivant l'une des revendications 1 à 7, caractérisé par le fait que le dispositif comparateur (30, 31, 32) comporte une mémoire électronique de télégrammes (30) qui est prévue pour au moins la suite partielle de signaux numériques, qui est spécifique pour le système considéré, et dont l'entrée (C) est reliée à la sortie du démodulateur (23) et dont la sortie est reliée à une entrée d'un comparateur électronique (31), à la seconde entrée duquel est raccordée la mémoire (32).

9. Système suivant la revendication 8, caractérisé par le fait que la mémoire de télégrammes (30) est réalisée sous la forme d'un registre à décalage.

10. Système suivant la revendication 8 ou 9, caractérisé par le fait que le signal de sortie (A) du comparateur (31) ainsi que le signal de service (18a) inversé (en 33), qui sont réunis selon la combinaison logique ET (en 29), sont appliqués de façon active à l'entrée de déclenchement (T) de la partie émission (36), qui après le déclenchement à l'instant de l'apparition de l'unité d'information immédiatement suivante, émet un train d'ondes sinusoïdales à la fréquence porteuse, dont la durée correspond au moins à la durée d'une unité d'information ($t_e$) dans le code biphase.

11. Système suivant l'une des revendications 3 à 10, caractérisé par le fait qu'en aval de la sortie de la partie réception (21) se trouve branché un décodeur biphase (24) dont le signal de sortie est envoyé à l'entrée (C) de la mémoire de télégrammes (30).

12. Système suivant la revendication 11, caractérisé par le fait que le décodeur biphase (24) est réalisé sous la forme d'un registre à décalage à deux étages constitués par deux bascules bista- bles (F1, F2).

13. Système suivant la revendication 11 ou 12, caractérisé par le fait qu'il est prévu un contrôleur de code biphase (25) qui, sur son côté entrée, est relié de façon active au décodeur biphase (24) et, sur son côté sortie, délivre un signal de remise à zéro pour un compteur de télégrammes (27) lors de l'apparition d'une violation de code dans le télégramme d'informations, le compteur de télégrammes (27) détectant, en effectuant un comptage, l'entrée de la suite partielle de signaux numériques, qui est spécifique pour le système considéré, et qu'il est prévu pour le contenu du compteur des télégrammes (27) un circuit interrogateur (28) dont le signal de sortie est actif respectivement après l'arrivée complète de l'ensemble de la suite partielle de signaux numériques, qui est spécifique pour le système considéré, sans violation de code, et que le signal de sortie du circuit interrogateur (28), le signal de sortie (A) du comparateur (31) et le signal de service (18a) inversé (en 33) sont combinés selon la combinaison logique ET dans un circuit ET (29).

14. Système suivant la revendication 15, caractérisé par le fait qu'en aval de la porte ET (29) est branché un étage à bascule monostable (34), dont l'état instable dure, après le positionnement, au moins jusqu'à la fin de l'unité d'information immédiatement suivante dans le télégramme d'informations.

15. Système suivant les revendications 7 et 14, caractérisé par le fait que le signal de sortie de l'étage à bascule monostable (34) est réuni, selon une combinaison logique ET dans un autre circuit ET (35), à un signal qui est activé exclusivement au voisinage des annulations de la tension alternative (s) du réseau, pendant la durée ($t_e$) d'une unité d'information, le signal de sortie de l'autre circuit ET (35) mettant en service la partie émis- sion (36).

FIG 1

1

"0" | "1" | "0" | "0" | "1" | "0" | "1" | "1" | "1" | "0"

FIG 2

$t_e$ — $t_e$ — $t_e$ — $t_e$

FIG 3

$t_H$

0

"0" | "1" | "0" | "0"

A

FIG 4
FIG 5

FIG 6

FIG 7

"0" | "1" | "0" | "0" | "1" | "0" | "1" | "1" | "1" | "0"

FIG 8

$t_e$ — $t_e$ — $t_e$

FIG 9

$t_H$

0

FIG 10

"0" | "1" | "0" | "0"

FIG 11

A

FIG 12

FIG 13

$t_s$

FIG 14

k | l

FIG 15

FIG 16

0 092 750

FIG 17
FIG 18
FIG 19
FIG 20
FIG 21
FIG 22
FIG 23
FIG 24
FIG 25
FIG 26
FIG 27
FIG 28

5